# EUROPEAN PATENT SPECIFICATION

(11) **EP 0 505 593 B1**
(45) Date of publication and mention of the grant of the patent: **03.07.1996**
(21) Application number: 91104911.2
(22) Date of filing: 27.03.1991
(51) Int. Cl.: B60N 2/22

(54) **Seat reclining device**
Sitzneigungsverstellvorrichtung
Dispositif d'inclinaison de siège

(43) Date of publication of application: 30.09.1992
(73) Proprietor: FUJIKIKO KABUSHIKI KAISHA, Tokyo 103 (JP)
(72) Inventor: Kinoshita, Takao, 2028 Washizu Kosai-shi, Shizuoka-ken (JP); Negi, Yoshitaka, 2028 Washizu Kosai-shi, Shizuoka-ken (JP); Matsuura, Hiroshi, 2028 Washizu Kosai-shi, Shizuoka-ken (JP)
(74) Representative: Grünecker, Kinkeldey, Stockmair & Schwanhäusser Anwaltssozietät

(56) References cited:
- EP-A- 0 415 781
- AU-B- 475 001
- AU-B- 481 270
- FR-A- 2 269 433
- FR-A- 2 606 337
- GB-A- 1 588 867
- GB-A- 2 078 850
- US-A- 4 913 494

## Description

The present invention relates to a seat reclining device, according to the precharacterising portions of claims 1 and 7.

From US-PS 4 913 494 there is known a seat reclining device comprising a base plate, an arm mounted in a freely pivoting manner on the said base plate, a lock mechanism, and an operating lever mounted in a freely pivoting manner on the said base plate, wherein said lock mechanism includes an upper tooth fixed to the said arm, a lower tooth mounted in a freely pivoting manner on the said base plate, and an operating member integrally fixed to the said operating lever, all of which are disposed between the said base plate and the said arm wherein by operating said operating lever said operating member can engage and disengage the lower tooth with the upper tooth for locking and unlocking said arm with respect to said base plate.

From GB-A-2 078 850 there is known a seat reclining device having a reclining mechanism comprising a base plate, an arm member mounted pivotally on said base plate, an engagement lever mounted on said base plate separate from said arm member and being capable to engage a tooth section provided on said arm member so as to prevent pivoting of the arm member relatively to said base plate when said lever member engages said tooth section of said arm member.

From AU-B-475 001 and AU-B-481 270 there are known seat reclining devices corresponding to the precharacterising portions of independent claims 1 and 7, respectively.

These prior art documents relates to a type of seat mechanisms, for which the inclination of the back of the seat can be released from a locked position so as to allow adjustment by sustained actuation of a lever. When the back is in a maximum inclined position, i.e. obtaining back seat access, the back is remaining unlocked, such that the lever need not be actuated.

It is an object of the present invention to provide a seat reclining device in which the mechanism is simple, handling is easy, the operation is reliable, and the cost of production is low and which requires reduced operating forces for unlocking the upper and lower tooth-portions also when the backrest of the respective seat is inclined into a rear position.

This object is achieved in the present invention by the provision of a seat reclining device as defined in the independent claims 1 and 7.

A preferred embodiment of the seat reclining device according to the present invention includes a foot pedal as an auxiliary operating lever for operating the operating lever through a link, mounted in a freely pivoting manner on the base plate on the seat reclining device of the present invention.

According to a further aspect of the invention, there is provided a roller for engaging the lower tooth provided on the operating member on the seat reclining device of the present invention.

According to another aspect of the invention, there is provided a wire fitting member linked to the operating lever through the link mounted in a freely pivoting manner on the base plate on the seat reclining device of the present invention.

Another preferred embodiment of the seat reclining device is given by the provision of a hand lever as an auxiliary operating lever to allow a person such as a rear seat passenger to operate the operating member, provided on the base plate on the seat reclining device of the present invention.

According to still another aspect of the present invention said seat reclining device further includes a sliding contact member with a cam surface integrally formed on the arm, and a guide member which is integrally formed on a guide surface and which slides in contact with the cam surface of the sliding contact member, wherein the arm pivots while the cam of the sliding contact member is sliding in contact with the guide surface of the guide member when the arm is inclined in the forward direction.

By means of the structure of the seat reclining device of the present invention as described above, the unlocking of the lock mechanism, specifically, the release of the locking action of the lower tooth with respect to the upper tooth, can be performed by activating the lower tooth through the operating member by operating the operating lever.

In addition, it is possible to change from the unlocked state to the locked state simply by releasing the operating lever.

### Brief Description of the Drawings

These and other objects, features, and advantages of the present invention will become more apparent from the following description of the preferred embodiments taken in conjunction with the accompanying drawings, in which:
FIG. 1 is a front elevation showing a first embodiment of the present invention.
FIG. 2 is a side elevation viewed from the line X-X in FIG. 1 in the direction indicated by the arrows.
FIG. 3 is a view for explaining the operation of a lock mechanism of the first embodiment of the present invention in the lock position.
FIG. 4 is a view for explaining the operation of a lock mechanism of the first embodiment of the present invention in the unlocked position.
FIG. 5 is a front elevation showing a second embodiment of the present invention.
FIG. 6 is a side elevation viewed from the line XIV-XIV in FIG. 5 in the direction indicated by the arrows.
FIG. 7 is a view from explaining the operation of a lock mechanism of the second embodiment of the present invention in the locked position.
FIG. 8 is a view for explaining the operation of a lock mechanism of the second embodiment of the present invention in the unlocked position.

### Detailed Description of the Preferred Embodiments

Other features of this invention will become apparent in the course of the following description of exemplary embodiments which are given for illustration of the invention and are not intended to be limiting thereof.

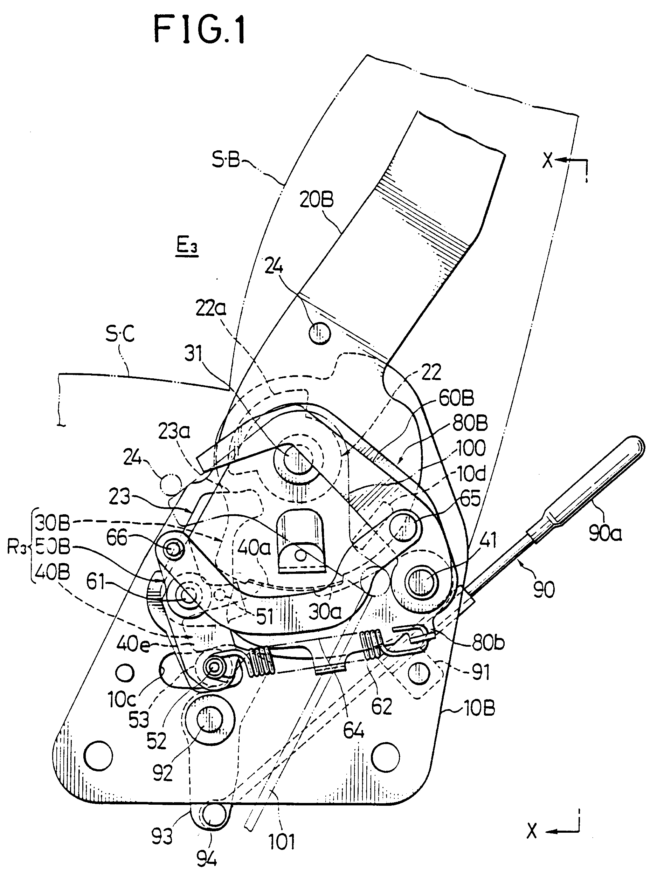

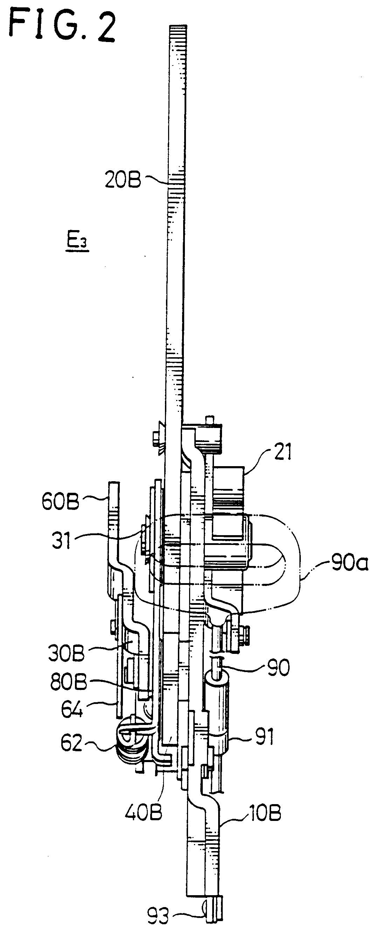

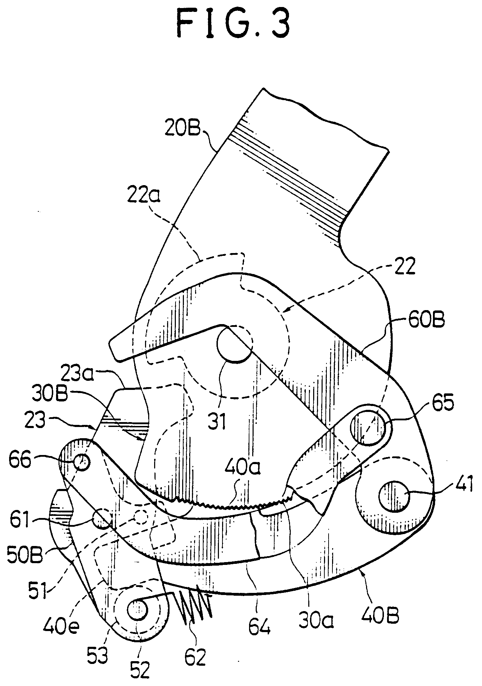

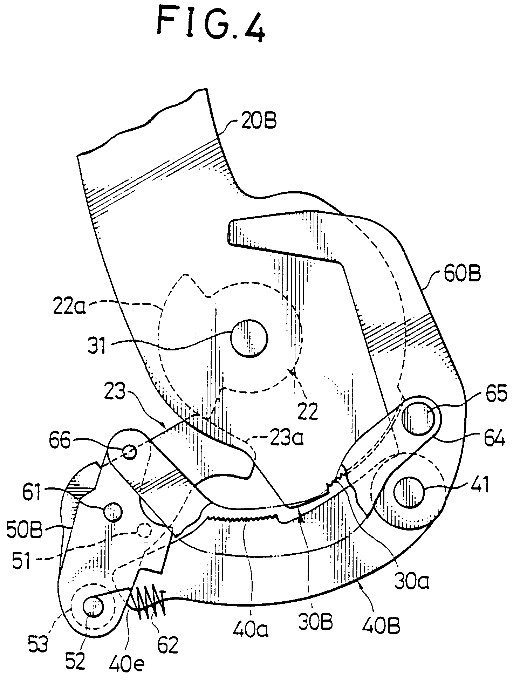

FIG. 1 to FIG. 4 are views of a first embodiment of the present invention. FIG. 1 is a front elevation showing a seat reclining device; FIG. 2 is a side elevation viewed from the line X-X in FIG. 1 in the direction indicated by the arrows; FIG. 3 is a view for explaining the operation of the lock mechanism of the present invention in the locked position; and FIG. 4 is a view for explaining the operation of the lock mechanism of the present invention in the unlocked position.

A seat reclining device E3 of the first embodiment, comprises a base plate 10B, an arm 20B pivotally mounted on the base plate 10B, a lock mechanism R3 displaced between the base plate 10B and the arm 20B, and an operating lever 60B. The lock mechanism R3 includes an upper tooth 30B, a lower tooth 40B which can engage the upper tooth 30B, and an operating member 50B for operating the lower tooth 40B. By using an operating lever 60B which is mounted on the base plate 10B in a freely pivoting manner, it is possible to operate the operating member 50B to lock and unlock the lower tooth 40B with respect to the upper tooth 30B.

A feature of the first embodiment of the present invention is that a roller 53 is provided which engages the lower tooth 40B on the operating member 50B. Another feature of this first embodiment is that a hand lever 90 is provided as an auxiliary operating lever for a rear seat passenger and so on to operate the operating member 50B. In addition, a sliding contact member 22 with a cam surface 22a is integrally provided on the arm 20B; a guide member 23, on which a guide surface 23a for slidably guiding the cam surface 22a of the sliding contact member 22 is formed, is integrally provided on the operating member 50B; and the arm 20B is constructed so that it pivots while the cam surface 22a of the sliding contact member 22 is sliding on the guide surface 23a of the guide member 23.

Next, the structure of the first embodiment will be explained in detail.

The upper tooth 30B is integrally formed with the arm 20B and is mounted through a first pivot 31 in a freely pivoting manner on the base plate 10 which is to be mounted on the side of the seat cushion S.C. On the lower edge of the upper tooth 30B an arc-shaped tooth section 30a is provided, centered around the first pivot 31. The arm 20B is to be mounted on the side of the seat back S.B. The sliding contact member 22 is integrally secured to the arm 20B, and the arc-shaped cam surface 22a is formed, centered around the first pivot 31, which is the mounting section for the upper arm 30B. The lower tooth 40B is mounted in a freely pivoting manner on the base plate 10B through a second pivot 41. A tooth section 40a which engages the tooth section 30a on the upper tooth 30B is formed on the upper edge of the free end of the lower tooth 40B, and a cam section 40e is formed on the tip.

The operating member 50B is mounted in a freely pivoting manner on the base plate 10B by means of a third pivot 61. The roller 53 which contacts the lower surface of the cam section 40e of the lower tooth 40B is supported in a freely rotatable manner on the pin 52 which is embedded in the free lower end of the operating member 50B. A boss 51 is formed in a position opposing the upper surface of the cam section 40e of the lower tooth 40B, close to the pivotal mounting section of the operating member 50B. The guide member 23 is integrally secured to the operating member 50B. The guide surface 23a, which contacts the cam surface 22a of the sliding contact member 22 when the arm 20B is inclined forward, is formed on the upper surface of the guide member 23. In FIG. 1, relief hole 10c is proved for the roller 53.

The operating lever 60B is mounted in a freely pivoting manner on the base plate 10B by the second pivot 41, and one end of a link 64 is pivotally supported by a connecting pin 65 at a position close to the mounting section. The other end of the link 64 is pivotally supported by a connecting pin 66 at the free upper end of the operating member 50B. In addition, one end of the tension spring 62 is engaged by the pin 52. The other end of the tension spring 62 is engaged by an engaging member 80b formed on a later described holder plate 80B. The operating lever 60B is energized by the tension spring 62 to pivot in the counterclockwise direction through the operating member 50 and the link 64.

One end of the first, second, and third pivots 31, 41, 61 respectively is secured to the base plate 10B and the other ends are secured to the holder plate 80B. Also, the coil spring 21 which causes the arm 20B to pivot in the counterclockwise direction is wound around the first pivot 31.

The hand lever 90 provided as a auxiliary operating lever for the rear seat passenger and so on is supported in a freely sliding manner on a support member 91 secured to the base plate 10B. A grip section 90a which is mounted at the upper end of the hand lever 90 projects to the rear seat side. The lower end of the hand lever 90 is pivotally supported by a connecting pin 94 on the free lower end of a lock release lever 93 which is supported in a freely pivoting manner on the base plate 10B by a fourth pivot 92. The lock release lever 93 is energized to pivot in the counterclockwise direction by a torsion coil spring (not shown) wound around the fourth pivot 92, and the free upper end of the lock release lever 93 is pressed against the roller 53. Then, the lock release lever 93 is caused to pivot in the counterclockwise direction pressed against the roller 53 by pulling the hand lever 90 upward, causing the operating member 50B to pivot in the clockwise direction so that the lower tooth 40B is unlocked with respect to the upper tooth 30B.

In addition, a working lever 100 (shown by an imaginary line) for operating a seat sliding device (not shown) is mounted in a freely pivoting manner on the first pivot 31. To one free end of the working lever 100 a wire 101 connected to the seat sliding device is attached. The other free end of the working lever 100 is set to contact the operating pin 24 embedded in the arm 20B when the arm 20B is inclined to the front, and the pivoting of the working lever 100 in the counterclockwise direction is regulated when one free end contacts a stopper 10d formed on the base plate 10B.

Accordingly, when the arm 20B is inclined to the front, the operating ping 24 contacts the other free end of the working lever 100, the working lever 100 is caused to pivot in the counterclockwise direction, and the seat sliding device is operated through the wire 101. As a result, the forward inclination of the arm 20B causes the seat to be moved to the full forward position.

The operation of the first embodiment of the present invention will now be explained.

To cause the seat back S.B to recline, the operating lever 60B is pivoted in the clockwise direction against the force of tension spring 62. The operating member 50B also pivots in the same direction through the link 64 so that the roller 53 is withdrawn from contact with the lower surface of the cam section 40e of the lower tooth 40B, and at the same time the boss 51 comes into contact with the upper surface of the cam section 40e so that the lower tooth 40B is caused to pivot counterclockwise. As a result, the engagement of the tooth sections 30a, 40a of the upper tooth 30B and the lower tooth 40B is released, the arm 20B is energized to pivot in the counterclockwise direction by the spring force of the coil spring 21, and the lock is unlocked as shown in FIG. 4. When the seat back S.B is at its maximum forward inclination, the arm 20B pivots while the cam surface 22a of the sliding contact member 22 is sliding on the guide surface 23a of the guide member 23 so that the lower tooth 40B is kept unlocked with respect to the upper tooth 30B.

Accordingly, when the person in the seat sets the seat back S.B at a desired angle and releases the operating lever 60B, the operating lever 60B pivots in the counterclockwise direction by the spring force of the tension spring 62 and returns to its original position. From this return action, the operating member 50B is pivoted counterclockwise through the link 64, the boss 51 is disengaged from the upper surface of the cam section 40e of the lower tooth 40B, and the roller 53 is pressed up against the bottom surface of the cam section 40e so that the lower tooth 40B is caused to pivot clockwise. As a result, the tooth section 30a, 40a of the upper tooth 30B and the lower tooth 40B are once again engaged, and the lock is locked as shown in FIG. 3.

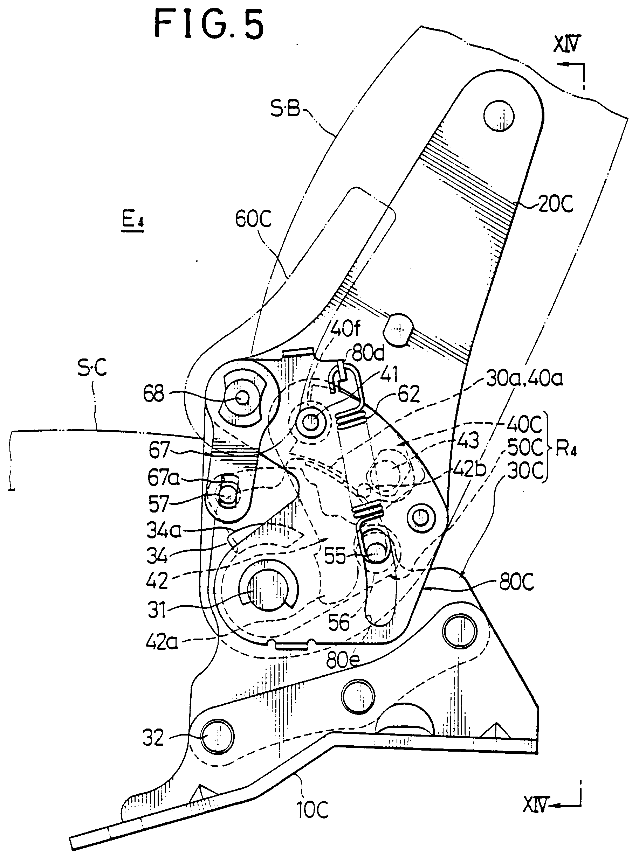

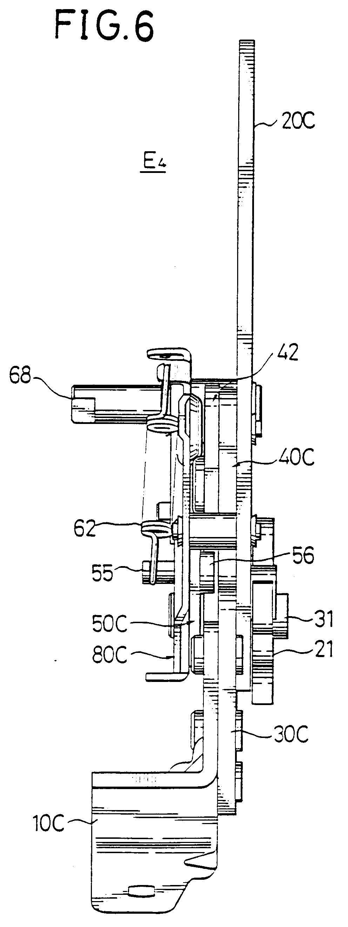

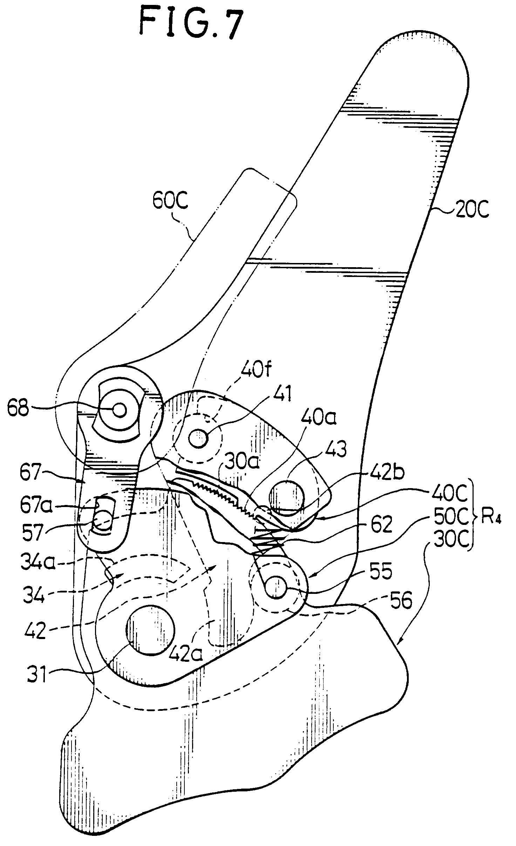

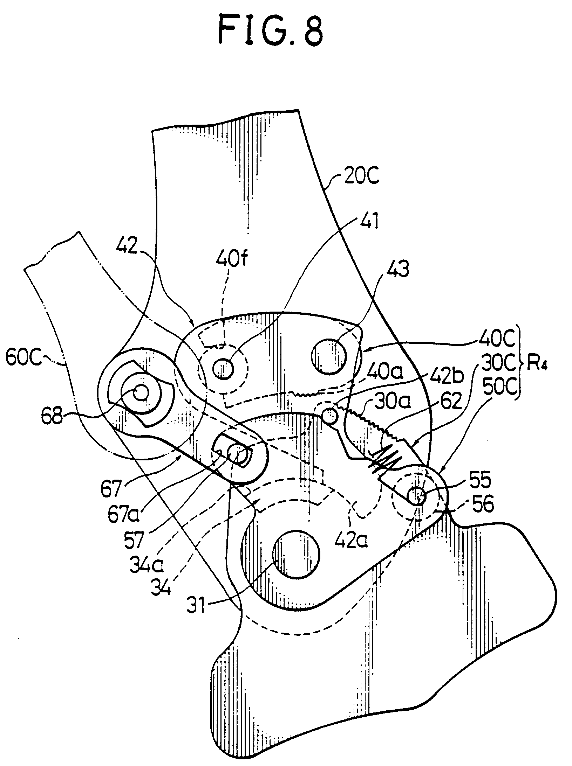

FIG. 5 to FIG. 8 are views of a fourth embodiment of the present invention. FIG. 5 is a front elevation showing a seat reclining device; FIG. 6 is a side elevation viewed from the line XIV-XIV in FIG. 5 in the direction indicated by the arrows; FIG. 7 is a view for explaining the operation of a lock mechanism of the present invention in the locked position; and FIG. 8 is a view for explaining the operation of the lock mechanism of the present invention in the unlocked position.

A seat reclining device E4 of the second embodiment comprises a base plate 10C, an arm 20C mounted in a freely pivoting manner on the base plate 10C, a lock mechanism R4, and an operating lever 60C mounted in a freely pivoting manner on the said arm 20C. The lock mechanism R4 is attached to the arm 20C. The lock mechanism R4 includes an upper tooth 30C integrally fixed to the base plate 10C, a lower tooth 40C, and an operating member 50C. By operating the operating lever 60C it is possible to operate the operating member 50C to lock and unlock the lower tooth 40C with respect to the upper tooth 30C.

Next, the structure of the second embodiment will be explained in detail.

A base plate 10C is to be mounted on the floor of the vehicle, the side of the seat cushion S.C, or other appropriate place. The upper tooth 30C is secured to the base plate 10C through three mounting pins 32, and on its upper edge the arc-shaped tooth section 30a is provided, centered around the first pivot 31. The base of the arm 20C, which is to be mounted on the seat back S.B, is mounted in a freely pivoting manner on the upper tooth 30C by means of the first pivot 31 which centers the pivoting of the arc of the tooth section 30a of the upper arm 30C.

The base of a lower tooth mounting member 42 is mounted in freely pivoting manner on the middle section of the arm 20C by the second pivot 41. A cam section 42a and a projection section 42b which is pressed against the later described operating member 50C are formed on a projecting section on the free end of the lower tooth mounting member 42. The tooth section 40a which engages the tooth section 30a on the upper tooth 30C is formed on the lower tooth 40C, and the base of the lower tooth 40C is mounted in a freely pivoting manner on the free end of the lower tooth mounting member 42 by means of a connecting pin 43. The second pivot 41 loosely fits into a forked section 40f formed on the free end of the lower tooth 40C.

The operating member 50C is formed in the shape of a bell crank. The base of the operating member 50C is mounted in a freely pivoting manner on the upper tooth 30C by means of the first pivot 31. The roller 56 in pressure contact with one side surface of the cam section 42a of the lower tooth mounting member 42 is supported in a freely rotatable manner by a pin 55 which is embedded in one free end of the operating member 50C. In addition, a connecting pin 57 is embedded in the other free end of the operating member 50C, and is connected to a later-described operating lever mounting member 67.

An operating lever 60C (shown by an imaginary line) is secured to the third pivot 68 provided on the base of the operating lever mounting member 67. The arm 20C is mounted in a freely pivoting manner on the third pivot 68 for which the movement in the axial direction is regulated. An elongated opening 67a is formed on the free end of the operating lever mounting member 67 at right angles to its pivoting direction. The connecting pin 57 of the operating member 50C is inserted into the elongated opening 67a.

One end of the first pivot 31 is secured to the upper tooth 30C, and one end of each of the second and third pivots 41, 68 is secured to the arm 20C. The other ends of the first, second, and third pivots 31, 41, 68 are secured to the holder plate 80C. The arm 20C is energized to pivot on the first pivot 31 in the counterclockwise direction by the spring force of a coil spring 21 secured to the first pivot 31. Also, the two ends of the tension spring 62 are engaged by an engaging section 80d formed on the holder plate 80C and the pin 55 of the operating member 50C respectively. The operating member 50C is energized to pivot counterclockwise by the tension spring 62, and, at the same time, the operating lever 60C is energized to pivot clockwise through the connecting pin 57 and the operating lever mounting member 67. A guide member 34 with a guide surface 34a which comes into pressure contact with the other side surface of the cam section 42a of the lower tooth mounting member 42 when the arm 20C is inclined forward is integrally provided on the upper tooth 30C. In FIG. 5, a relief hole 80e is formed in the holder plate 80C for the pin 55.

The operating lever 60C is pivoted in the counterclockwise direction against the force of the tension spring 62 to cause the seat back S.B to recline. When this occurs, the operating member 50C pivots in the clockwise direction through the connecting pin 57 and the operating lever mounting member 67, and the roller 56 is disengaged from one side surface of the cam section 42a of the lower tooth mounting member 42. As a result, the lower tooth mounting member 42 can pivot. The upper end of the operating member 50C is pressed against the projection section 42b and the lower tooth mounting member 42 pivots in the counterclockwise direction, so that the tooth sections 30a, 40a of the upper tooth 30 and the lower tooth 40 are disengaged and the arm 20C pivots in the counterclockwise direction from the spring force of the coil spring 21 to unlock the lock mechanism R4, as shown in FIG. 8. When the seat back S.B is at its maximum forward inclination, the arm 20C pivots while the other side of the cam section 42a of the lower tooth mounting member 42 is pressed against the guide surface 34a of the guide member 34 so that the lower tooth 40C is maintained in the disengaged state with respect to the upper tooth 30C.

Accordingly, when the person in the seat sets the seat back S.B at a desired angle and releases the operating lever 60C, the operating lever 60C pivots in the clockwise direction from the spring force of the tension spring 62 and returns to its original position. From this return action, the operating member 50C is caused to pivot counterclockwise through the operating lever mounting member 67, and the roller 56 is pressed up against one side surface of the cam section 42a of the lower tooth mounting member 42 so that the lower tooth mounting member 42 is caused to pivot clockwise. As a result, the tooth sections 30a, 40a of the upper tooth 30C and the lower tooth 40C are once again engaged, and the lock mechanism R4 is locked as shown in FIG. 7.

The explanation of the first and second, embodiments of the present invention was given with respect to one side of the lock mechanism R3, and R4, but, in the the seat reclining device of the present invention can of course be applied to a pair of lock mechanisms (R3, R3, R4, R4) on both the left and right sides of the seat.

The seat reclining device of the present invention can be easily manufactured at a low cost, and, in addition, it is easy to operate and provides reliable operation.

## Claims

1. A seat reclining device (E3) comprising a base plate (10B), an arm (20B) mounted in a freely pivoting manner on said base plate (10B), a lock mechanism (R3), and an operating lever (60B) mounted in a freely pivoting manner on said base plate (10B), wherein said lock mechanism (R3) includes an upper tooth (30B) fixed to said arm (20B), a lower tooth (40B) mounted in a freely pivoting manner on said base plate (10B), and an operating member (50B) integrally fixed to the said operating lever (60B), all of which (30B, 40B, 50B) are disposed between the said base plate (10B) and the said arm (20B), and wherein by operating said operating lever (60B), said operating member (50B) can engage and disengage to said lower tooth (40B) with said upper tooth (30B) for locking and unlocking said arm (20B) with respect to the said base plate (10B), **characterized in that** the said lower tooth (40B) is mounted in a freely pivoting manner to the said operating lever (60B) and in that the said arm (20B) has a sliding contact member (22) with a cam surface (22a) integrally fixed to the arm (20B), wherein said operating member (50B) has a guide member (23) with a guide surface (23a) integrally fixed to the operating member (50B), said cam surface (22a) of the sliding contact member (22) being slidable in contact with said guide surface (23a) of the guide member (23) so that the said arm (20B), when it is inclined in the forward direction, rotates while the sliding contact member (22) is sliding on the guide member (23).

2. The seat reclining device (E3) as claimed in claim 1, **characterized in that** a roller (53) for engaging the lower tooth (40B) is provided on the said operating member (50B).

3. The seat reclining device (E3) as claimed in claim 1, **characterized in that** an auxiliary operating lever (90) is provided on the base plate (10B) for operating the operating member (50B).

4. The seat reclining device (E3) as claimed in claim 3, **characterized in that** the said auxiliary operating lever is a foot pedal (63) mounted in a freely pivoting manner on the base plate (10B) for operating the operating member (50B).

5. A seat reclining device (E3) as claimed in claim 4, **characterized in that** the foot pedal (63) is operable for operating the operating member (50B) through the operating lever (60B).

6. The seat reclining device (E3) as claimed in claim 3, **characterized in that** the said auxiliary operating lever is a hand lever (90) for a rear seat passenger.

7. A seat reclining device (E4) comprising a base plate (10C), an arm (20C) mounted in a freely pivoting manner on the said base plate (10C), a lock mechanism (R4), and an operating lever (60C) mounted in a freely pivoting manner on said arm (10C), wherein the said lock mechanism (R4) is attached to said arm (20C) and consisted mainly of an upper tooth (30C) integrally fixed to said base plate (10C), a lower tooth (40C), and an operating member (50C), and wherein, by operating said operating lever (60C), said operating member (50C) can engage and disengage said lower tooth (40C) with said upper tooth (30C) for locking and unlocking the said arm (20C) with respect to said base plate (10C), **characterized in that** a roller (56) for engaging the lower tooth (40C) is provided on said operating member (50C) wherein said arm (20C) has a sliding contact member (42) with a cam surface (42a) integrally fixed to said arm (20C), and in that the upper tooth (30C) has a guide member (34) with a guide surface (34a) integrally fixed to the upper tooth (30C), said cam surface (42a) of the sliding contact member (42) being slidable in contact with the said guide surface (34a) of the guide member (34) so that the said arm (20C), when it is inclined in the forward direction, rotates while the sliding contact member (42) is sliding on the guide member (34).

8. The seat reclining device (E4) as claimed in claim 7, **characterized in that** an auxiliary operating lever (63, 90) is provided on the base plate (10C) for operating the operating member (50C).

9. The seat reclining device (E4) as claimed in claim 8, **characterized in that** the auxiliary operating lever is a foot pedal (63) mounted in a freely pivoting manner on the base plate (10C) for operating the operating member (50C).

10. The seat reclining device (E4) as claimed in claim 9, **characterized in that** the foot pedal (63) is operable for operating the operating member (50C) through the operating lever (60C).

11. The seat reclining device (E4) as claimed in claim 8, **characterised in that** the auxiliary operating lever is a hand lever (90) for a rear seat passenger.

12. The seat reclining device (E4) as claimed in claim 7, **characterized in that** said pair of lock mechanisms (R4, R4) are connected with each other by a wire (75) both ends of which are respectively fixed to wire fitting members (70, 70) at least one of which is linked to the said operating lever (60C) so that the said pair of lock mechanisms (R4, R4) work together.

## Patentansprüche

1. Sitzneigungsverstellvorrichtung (E3) mit einer Grundplatte (10B), einem Arm (20B), welcher in schwenkbewegbarer Weise an jener Grundplatte (10B) angebracht ist, einem Sperrmechanismus (R3), und einem Betätigungshebel (60B), welcher in schwenkbewegbarer Weise an jener Grundplatte (10B) befestigt ist, wobei der Sperrmechanismus (R3) ein oberes Verzahnungsteil (30B), welches an jenem Arm (20B) angebracht ist, ein unteres Verzahnungsteil (40B), welches in schwenkbewegbarer Weise an jener Grundplatte (10B) angebracht ist, und ein Betätigungsteil (50B) umfaßt, welches mit dem Betätigungshebel (60B) gekoppelt ist, wobei diese Teile (30B,40B,50B) zwischen der Grundplatte (10B) und dem Arm (20B) angebracht sind, und wobei durch Betätigung des Betätigungshebels (60B) jenes Betätigungsteil (50B) das obere Verzahnungsteil (30B) mit dem unteren Verzahnungsteil (40B) in Eingriff oder außer Eingriff bringen kann, um jenen Arm (20B) gegenüber der Grundplatte (10B) zu verrasten oder zu entrasten, **dadurch gekennzeichnet,** daß das untere Verzahnungsteil (40B) in schwenkbewegbarer Weise mit dem Betätigungshebel (60B) verbunden ist, und daß der Arm (20B) ein Gleitkontaktteil (22) mit einer Kurvenfläche (22a) umfaßt, welche an dem Arm (20B) befestigt ist, wobei das Betätigungsteil (50B) ein Führungsteil (23) mit einer Führungsfläche (23a) aufweist, welche integral an dem Betätigungsteil (50B) vorgesehen ist, wobei die Kurvenfläche (22a) des Gleitkontaktteils (22) in Gleitkontakt mit jener Gleitfläche (23a) des Führungsteiles (23) steht, so daß bei Schwenken des Armes (20B) in Vorwärtsrichtung das Gleitkontaktteil (22) auf dem Führungsteil (23) gleitet.

2. Sitzneigungsverstellvorrichtung (E3) nach Anspruch 1, **dadurch gekennzeichnet,** daß eine zum Eingriff mit dem unteren Verzahnungsteil (40B) vorgesehene Rolle (53) an dem Betätigungsteil (50B) vorgesehen ist.

3. Sitzneigungsverstellvorrichtung (E3) nach Anspruch 1, **dadurch gekennzeichnet,** daß ein Zusatzbetätigungshebel (90) an der Grundplatte (10B) vorgesehen ist zur Betätigung des Betätigungsteiles (50B).

4. Sitzneigungsverstellvorrichtung (E3) nach Anspruch 3, **dadurch gekennzeichnet,** daß der Zusatzbetätigungshebel (90) ein Fußpedal (63) ist, das in schwenkbewegbarer Weise an der Grundplatte (10B) befestigt ist zur Betätigung des Betätigungsteiles (50B).

5. Sitzneigungsverstellvorrichtung (E3) nach Anspruch 4, **dadurch gekennzeichnet**, daß das Fußpedal (63) derart betätigbar ist, daß dieses das Betätigungsteil (50) über den Betätigungshebel (60B) betätigt.

6. Sitzneigungsverstellvorrichtung (E3) nach Anspruch 3, **dadurch gekennzeichnet,** daß der Zusatzbetätigungshebel (90) ein Handhebel für einen Rücksitzfahrgast ist.

7. Sitzneigungsverstellvorrichtung (E4) mit einer Grundplatte (10C), einem Arm (20C), welcher in schwenkbewegbarer Weise an jener Grundplatte (10C) angebracht ist, einem Rastmechanismus (R4), und einem Betätigungshebel (60C), welcher in schwenkbewegbarer Weise an jenem Arm (10C) angebracht ist, wobei der Rastmechanismus (R4) an jenem Arm (20C) befestigt ist, und im wesentlichen aus einem oberen Verzahnungsteil (30C), welches einstückig an jener Grundplatte (10C) befestigt ist, einem unteren Verzahnungsteil (40C), und einem Betätigungsteil (50C) besteht, wobei durch Betätigung des Betätigungshebels (60C) jenes Betätigungsteil (50C) das obere Verzahnungsteil (30c) mit dem unteren Verzahnungsteil (40c) in Eingriff oder außer Eingriff bringbar ist zum Verriegeln bzw. Entriegeln des Armes (20C) gegenüber der Grundplatte (10C), **dadurch gekennzeichnet,** daß eine mit dem unteren Verzahnungsteil (40C) in Wirkverbindung bringbare Rolle (56) an jenem Betätigungsteil (50C) vorgesehen ist, wobei der Arm (20C) ein Gleitkontaktteil (42) mit einer Kurvenfläche (42a) umfaßt, welches mit jenem Arm (20C) verbunden ist, und daß das obere Verzahnungsteil (30c) ein Führungsteil (34) mit einer Führungsfläche (34a) aufweist, welche integral an dem oberen Verzahnungsteil (30c) befestigt ist, wobei eine Kurvenfläche (42a) des Gleitkontaktteiles (42) mit der Gleitfläche (34a) des Führungsteiles (34) in Gleitkontakt steht, so daß, wenn der Arm (20C), in Richtung nach vorne geneigt wird, das Gleitkontaktteil (42) auf dem Führungsteil (34) gleitet.

8. Sitzneigungsverstellvorrichtung (E4) nach Anspruch 7, **dadurch gekennzeichnet,** daß ein Zusatzbetätigungshebel (63,90) an der Grundplatte (10c) vorgesehen ist, zur Betätigung des Betätigungsteiles (50C).

9. Sitzneigungsverstellvorrichtung (E4) nach Anspruch 8, **dadurch gekennzeichnet,** daß der Zusatzbetätigungshebel (63) als Fußpedal ausgebildet ist, welches in schwenkbewegbarer Weise an der Grundplatte (10c) befestigt ist zur Betätigung des Betätigungsteiles (50C).

10. Sitzneigungsverstellvorrichtung (E4) nach Anspruch 9, **dadurch gekennzeichnet,** daß das Fußpedal (63) zur Betätigung des Betätigungsteiles (50C) vermittels des Betätigungshebels (60C) betätigbar ist.

11. Sitzneigungsverstellvorrichtung (E4) nach Anspruch 8, **dadurch gekennzeichnet,** daß der Zusatzbeätigungshebel als Handhebel (90) für einen Rücksitzfahrgast ausgebildet ist.

12. Sitzneigungsverstellvorrichtung (E4) nach Anspruch 7, **dadurch gekennzeichnet,** daß ein Paar von Rastmechanismen (R4,R4) miteinander über einen Draht (75) verbunden sind, dessen beide Enden jeweils an Drahteinsatzteilen (70,70) befestigt sind, von welchen wenigstens eines mit dem Betätigungshebel (60C) operativ verbunden ist, so daß beide Rastmechanismen (R4,R4) zusammen arbeiten.

## Revendications

1. Dispositif d'inclinaison de siège (E3) comprenant une plaque de base (10B), un bras (20B) monté de manière à pivoter librement sur ladite plaque de base (10B), un mécanisme de blocage (R3), et un levier d'actionnement (60B) monté de manière à pivoter librement sur ladite plaque de base (10B), dans lequel ledit mécanisme de blocage (R3) inclut une dent supérieure (30B) fixée sur ledit bras (20B), une dent inférieure (40B) montée de manière à pivoter librement sur ladite plaque de base (10B), et un élément d'actionnement (50B) intégralement fixé sur ledit levier d'actionnement (60B), qui sont tous (30B, 40B, 50B) disposés entre ladite plaque de base (10B) et ledit bras (20B), et dans lequel en actionnant ledit levier d'actionnement (60B) ledit élément d'actionnement (50B) peut engager et dégager ladite dent inférieure (40B) par rapport à ladite dent supérieure (30B) pour bloquer et débloquer ledit bras (20B) par rapport à ladite plaque de base (10B), caractérisé en ce que ladite dent inférieure (40B) est montée de manière à pivoter librement sur ledit levier d'actionnement (60B), et en ce que ledit bras (20B) comporte un élément à contact coulissant (22) avec une surface de came (22a) intégralement fixée sur le bras (20B), dans lequel ledit élément d'actionnement (50B) possède un élément de guidage (23) avec une surface de guidage (23a) intégralement fixée sur l'élément d'actionnement (50B), ladite surface de came (22a) de l'élément à contact coulissant (22) étant capable de coulisser en contact avec ladite surface de guidage (23a) de l'élément de guidage (23), de sorte que lorsqu'il est incliné dans la direction vers l'avant, ledit bras (20B) tourne tandis que l'élément à contact coulissant (22) coulisse sur l'élément de guidage (23).

2. Dispositif d'inclinaison de siège (E3) selon la revendication 1, caractérisé en ce qu'il est prévu un galet (53) pour engager la dent inférieure (40B) sur ledit élément d'actionnement (50B).

3. Dispositif d'inclinaison de siège (E3) selon la revendication 1, caractérisé en ce qu'il est prévu un levier d'actionnement auxiliaire (90) sur la plaque de base (10B) pour actionner l'élément d'actionnement (50B).

4. Dispositif d'inclinaison de siège (E3) selon la revendication 3, caractérisé en ce que ledit levier d'actionnement auxiliaire est une pédale à pied (63) montée de manière à pivoter librement sur la plaque de base (10B) pour actionner l'élément d'actionnement (50B).

5. Dispositif d'inclinaison de siège (E3) selon la revendication 4, caractérisé en ce que la pédale à pied (63) est susceptible d'être actionnée pour actionner l'élément d'actionnement (50B) via le levier d'actionnement (60B).

6. Dispositif d'inclinaison de siège (E3) selon la revendication 3, caractérisé en ce que ledit levier d'actionnement auxiliaire est un levier manuel (90) pour un siège de passager arrière.

7. Dispositif d'inclinaison de siège (E4) comprenant une plaque de base (10C), un bras (20C) monté de manière à pivoter librement sur ladite plaque de base (10C), un mécanisme de blocage (R4), et un levier d'actionnement (60C) monté de manière à pivoter librement sur ledit bras (10C), dans lequel ledit mécanisme de blocage (R4) est attaché audit bras (20C) et consiste principalement en une dent supérieure (30C) intégralement fixée à ladite plaque de base (10C), une dent inférieure (40C), et un élément d'actionnement (50C), et dans lequel, en actionnant ledit levier d'actionnement (60C), ledit élément d'actionnement (50C) peut faire engager et dégager ladite dent inférieure (40C) par rapport à ladite dent supérieure (30C) pour bloquer et débloquer ledit bras (20C) par rapport à ladite plaque de base (10C), caractérisé en ce qu'il est prévu un galet (56) pour engager la dent inférieure (40C) sur ledit élément d'actionnement (50C), dans lequel ledit bras (20C) possède un élément à contact coulissant (42) avec une surface de came (42a) fixée de manière intégrée audit bras (20C), et en ce que la dent supérieure (30C) présente un élément de guidage (34) avec une surface de guidage (34a) intégralement fixée sur la dent supérieure (30C), ladite surface de came (42a) de l'élément à contact coulissant (42) étant capable de coulisser en contact avec ladite surface de guidage (34a) de l'élément de guidage (34), de sorte que lorsqu'il est incliné dans la direction vers l'avant, ledit bras (20C) tourne tandis que l'élément à contact coulissant (42) coulisse sur l'élément de guidage (34).

8. Dispositif' d'inclinaison de siège (E4) selon la revendication 7, caractérisé en ce qu'il est prévu un levier d'actionnement auxiliaire (63, 90) sur la plaque de base (10C) pour actionner l'élément d'actionnement (50C).

9. Dispositif d'inclinaison de siège (E4) selon la revendication 8, caractérisé en ce que le levier d'actionnement auxiliaire est une pédale à pied (63) montée de manière à tourner librement sur la plaque de base (10C) pour actionner l'élément d'actionnement (50C).

10. Dispositif d'inclinaison de siège (E4) selon la revendication 9, caractérisé en ce que la pédale à pied (63) peut être actionnée pour actionner l'élément d'actionnement (50C) via le levier d'actionnement (60C).

11. Dispositif d'inclinaison de siège (E4) selon la revendication 8, caractérisé en ce que le levier d'actionnement auxiliaire est un levier manuel (90) pour un siège de passager arrière.

12. Dispositif d'inclinaison de siège (E4) selon la revendication 7, caractérisé en ce que ladite paire de mécanismes de blocage (R4, R4) sont connectés l'un avec l'autre par un fil (75) dont les deux extrémités sont respectivement fixées à des éléments d'attache de fil (70, 70) dont l'un au moins est articulé sur ledit levier d'actionnement (60C) de manière que ladite paire de mécanismes de blocage (R4, R4) travaillent ensemble.
